# EUROPEAN PATENT SPECIFICATION

(11) **EP 1 174 449 B1**
(45) Date of publication and mention of the grant of the patent: **06.09.2006**
(21) Application number: 00500159.9
(22) Date of filing: 20.07.2000
(51) Int. Cl.: C08F 297/04, C08L 53/02

(54) **Monoalkenyl aromatic hydrocarbon-1, 3-conjugated diene block copolymers and waterproofing membranes comprising said copolymers**
Styrol-1,3-Butadienblockcopolymere und Wasserdichtmembranen hergestellt davon
Copolymères à blocs du type styrène-1,3 butadiène et les membranes avec une résistance à l'eau comprenant lesdits copolymères

(43) Date of publication of application: 23.01.2002
(73) Proprietor: Dynasol Elastomeros, S.A., 28046 Madrid (ES)
(72) Inventor: Salazar Uhagon, Francisco Borja, 39012 Santander (Cantabria) (ES); Ruiz Santa Quiteria, Valentin, 28039 Madrid (ES); Fraga Trillo, Luisa Maria, 28005 Madrid (ES); Montero Carnerero, Enrique, 39007 Santander (Cantabria) (ES)
(74) Representative: Del Santo Abril, Natividad

(56) References cited:
- WO-A-95/07307
- US-A- 4 167 545
- US-A- 4 346 193
- US-A- 4 371 661
- US-A- 4 390 663
- US-A- 4 485 210
- US-A- 5 264 489
- US-A- 5 272 214
- US-A- 5 319 033

## Description

### FIELD OF THE INVENTION

The invention refers to monoalkenyl aromatic hydrocarbon-1,3-conjugated diene block copolymers, to a process for obtaining same and to waterproofing membranes comprising said copolymers having improved thermal susceptibility and processability.

### BACKGROUND OF THE INVENTION

Asphalt is basically a colloidal substance which includes a dispersed phase (asphaltenes) covered with a polar resin protective layer. This complex, called micelle, is dispersed into a continuous maltenic phase of saturated and aromatic oils. The relative proportion of each of these components defines the chemical asphalt nature and the compatibility conditions with the different types of polymers *(Quim. Ind. (1993). Abril-Mayo. Luis Aguado Alonso. " Membranas de mejor rendimiento para impermeabilización en general", pp 208-210).*

Asphalt, mainly obtained as a by-product in oil refining process, has become one of the first thermoplastics used as an adhesive or water-proofing material. Its low cost justifies its use in a wide variety of applications, being the most important ones road paving and waterproofing membranes.

In spite of its initial wide variety of applications, asphalt is extremely sensitive to temperature, being hard and brittle at low temperatures and soft, showing a tendency to flow, at high temperatures. It inherently is also deficient in some other physical properties (mechanical and elastic behaviour) which it would be highly desirable to improve.

The latest water proofing membranes are subjected to more intense movements and wider temperature variations. In these conditions, the traditional membranes based on blown and oxidized asphalt are likely to brittle.

This is the reason why the newest building techniques are promoting a progressive demand for polymer-modified bitumen. Since the late 1950s, certain conjugated diene rubbers, ethylene-based plastics like EVA (ethylene vinyl acetate) and PE (polyethylene), neoprene, resins, fillers and other materials have been added to modify the physical properties of the asphalt binder. Some of them have excellent weather resistance, sealing and bonding properties but are often deficient with respect to warm tack, modulus, hardness or thermal stability *(Materials Forum, 19. 241-254 (1995). K.A. Dransfield, M.J.S. Gani, Z.H. Stachurski, S. Macarrone. "Resistencia al fallo del betún) ( U.S. Patent No. 5,130,354 - Shell Oil Co.).*

Since the late1960s, vinyl aromatic hydrocarbon-conjugated diene rubber and vinyl aromatic hydrocarbon-conjugated diene rubber block copolymers such as styrene-butadiene-styrene (SBS) and styrene-isoprene-styrene block copolymers have been used to dramatically improve the thermal and mechanical properties of asphalts *[JP 03,259,955 (1991) - Kuraray Co.Ltd., DE 40 31 745 (1992), JP 05 93,140 (1993) - Nippon Zeon CO, ES 2,069,471 (1995)-Repsol Petróleo S.A., GB 2294935 A1 (1996) - Shell Internationale Research Maatschappij B.V., Netherlands, EP 728814 A1 (1996), U.S. Patent No.5,051,457 -Shell Oil Co.].*

The modification and combination of the different structural parameters (monoalkenyl aromatic hydrocarbon content and its monomer distribution, molecular weight and molecular weight distribution, radial or linear structure, elastomeric fraction microstructure, physical form) lead to a wide variety of thermoplastic elastomers compatible with different bitumens in waterproofing applications. The improvement in elastic properties, low temperature flexibility, high temperatures stability and aging stability has to be compatible with the workability according to the conventional methods used in waterproofing techniques. The above mentioned requirements for waterproofing membranes, are defined, for bitumen-block copolymer formulations, as:
· Ring and ball Softening temperature > 121°C (250°F)
· Block copolymer / bitumen mixing ability at temperatures no higher than about 200°C.
· Cold bend temperatures:
   · for elastomeric membranes < -20°C (in Scandinavia < -25°C)
   · for plastomeric membranes < -15°C

Furthermore, bitumen compositions suitable for waterproofing should achieve a penetration value at 50°C as low as possible. However, if for achieving this purpose the amount of additive is increased too much, the viscosity of the composition becomes too high, resulting in major processability problems.

As described in the prior art *[EP 728814 A 1 (1996), US 5,051,457]*, the tendency to the use of thermoplastic elastomers with radial structure coupled with silicon compounds (silicon tetrachloride, dimethyl diclorosilane, methyl diclorosilane, etc...) is justified because of its better behaviour at high temperatures than the linear SBS's that seem to exhibit slightly better properties at low temperatures. Its lower viscosity at high temperature not only means that the bituminous formulation can be processed more easily but that is also possible to add a superior amount of filler without reaching the viscosity-processability limit, making the formulation cheaper.

### DETAILED DESCRIPTION OF THE INVENTION

It has been found that the use of divinyl benzene (DVB) as coupling agent let us obtain a radial polymer with a superior number of arms linked to the divinyl benzene core and with more flexibility in the design of the final polymer in terms of molecular weight, viscosity or styrene content. This highly branched type of polymers improves significantly the properties of the waterproofing formulations in comparison to the Si radial copolymers previously mentioned.

Therefore, an object of the present invention is the provision of a a monoalkenyl aromatic hydrocarbon and 1,3-conjugated diene block copolymer composition of general formula (I) + (II): 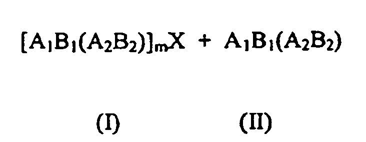 wherein
A_{1,} A₂ represent a monoalkenyl aromatic hydrocarbon polymeric block;
B₁, B₂ represent a conjugated 1,3-diene polymeric block;
X represents a divinyl benzene core;
m is from 2 to 10;
the amount of block copolymer according to formula (II) is from 0 to 20 % by weight;
the molar ratio A₁/A₂ varies from 90/10 to 60/40;
the molar ratio B₁/B₂ varies from 99.5/0.5 to 75/25; and
the monoalkenyl aromatic hydrocarbon content of the polymer varies from 20 to 45% by weight, and the 1,3-conjugated diene content of the polymer varies from 80 to 55% by weight.

Another object of the present invention is the provision of a process for the preparation of the monoalkenyl aromatic hydrocarbon and 1,3-conjugated diene block copolymer composition described above which comprises the following steps:
a) anionic polymerization of the monoalkenyl aromatic hydrocarbon in a hydrocarbon solvent, using alkyl lithium as initiator, at a temperature between 0°C and 150°C, to form block A₁; followed by
b) anionic polymerization of the 1,3-conjugated diene, in the same reaction medium wherein step a) has been carried out, using alkyl lithium as initiator, at a temperature between 0°C and 150°C, to form block B₁, thus obtaining copolymer A₁B₁; followed by
c) further polymerization of the monoalkenyl aromatic hydrocarbon, in the same reaction medium wherein steps a) and b) have been carried out, using alkyl lithium as initiator, at a temperature between 0°C and 150°C, to form block A₂, followed by further polymerization of the 1,3-conjugated diene, in the same reaction medium wherein the previous steps have been carried out, using alkyl lithium as initiator, at a temperature between 0°C and 150°C, to form block B₂, thus obtaining copolymer A₁B₁(A₂B₂); followed by
d) coupling reaction of the chains of the block copolymer A₁B₁(A₂B₂) from step c), with divinyl benzene, at a temperature between 70°C and 90°C, with a molar ratio divinyl benzene/organollitic compound between 0.5 and 10, preferably between 2 and 7, in order to couple among 2 and 10 chains of said copolymers; followed by
e) termination of the active chains with a polymerization terminating agent.

The monoalkenyl aromatic hydrocarbon is preferably styrene or α-methyl-styrene, and the 1,3-conjugated diene is preferably 1,3-butadiene or isoprene.

As used in the present description, the term "divinyl benzene" includes all the possible isomers of divinyl benzene and mixtures thereof.

These block copolymer compositions, when used in amounts of 7-15% by weight, preferably from 10 to 14%, in combination with a bitumen, confer to the bitumen composition an optimal balance between viscosity and penetration at 50°C, while maintaining low cold bend temperature.

Another object of the present invention is the provision of bitumen compositions comprising about 85 to 93% by weight, preferably from 86 to 90% by weight, of a bituminous component having a penetration of 70-220, preferably 150-200 decimillimeters at 25°C and from 7 to 15% by weight, preferably from 10 to 14% by weight, of a polymeric additive, wherein the composition fulfils the following relationship: P₅₀ < 130 - 0.01µ, wherein P₅₀ represents the penetration at 50°C in decimillimeters and µ is the blend viscosity (180°C) in cps (mPa.s), and the cold bend T is lower than -25°C. Preferably the composition according to the invention fulfils the relationship: P₅₀ < 127 - 0.01µ, most preferably P₅₀ < 125 - 0.01µ.

It has been found that, by using as a polymeric additive a monoalkenyl aromatic hydrocarbon and 1,3-conjugated diene block copolymer composition of formula: 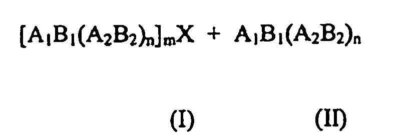 wherein
A₁, A₂ represent a monoalkenyl aromatic hydrocarbon polymeric block;
B_{1,} B₂ represent a conjugated 1,3-diene polymeric block;
X represents a divinyl benzene core;
n is 0 or 1;
m is from 2 to 10;
the amount of block copolymer according to formula (II) is from 0 to 20 % by weight;
the molar ratio A₁/A₂ varies from 90/10 to 60/40;
the molar ratio B₁/B₂ varies from 99.5/0.5 to 75/25; and
the monoalkenyl aromatic hydrocarbon content of the polymer varies from 20 to 45% by weight, and the 1,3-conjugated diene content of the polymer varies from 80 to 55% by weight,
the above defined relationship is fulfilled, producing a bitumen composition presenting improved thermal susceptibility in view of the prior art. This bitumen composition can be used in the manufacture of waterproofing membranes.

The process for the preparation of the block copolymer composition according to the invention is carried out in the presence of a hydrocarbon solvent. The solvent used is preferably an aliphatic or cycloaliphatic hydrocarbon such as n-pentane, n-hexane, n-heptane, cyclohexane, mixtures of cyclohexane with alkane isomers with 5 to 10 carbon atoms, and mixtures thereof. This may be mixed with one or more components. The polymerization medium is preferably free from impurities such as CO₂, O₂ and water, which may affect the active center of polymerization. The amount of solvent to be used is selected such that it enables proper stirring of the mixture and good dispersion of the heat produced during the polymerization reaction. Likewise, the process can be performed in continuous, semicontinuous and discontinuous reactors.

The polymerization temperature is between 0 and 150 °C, preferably between 20-120°C. It has been observed that the temperature has an effect on the polymerization rate and on the polymer structure. Likewise, the reaction may be carried out under both isothermal and adiabatic conditions.

To control the vinyl addition of the polymers, organic compounds acting as polar modifiers, such as tetrahydrofurane (THF) or N,N,N',N'-tetramethylethylendiamine (TMEDA), are optionally added to the reaction medium. The amounts of these polar modifiers may fluctuate for example between 0.15 and 5 wt % based on the reaction mass for the case of THF and 0.01 and 0.5 wt % for the case of TMEDA, as a function of the desired vinyl content. Preferably, the vinyl content of the block copolymer is within the range 7-45%.

A discontinuous or batch polymerization process of those mentioned above could be
performed by loading, into an appropriate reactor, the solvent and the monomers in subsequent steps. The initial reaction mixture is brought to a temperature between 0 and 150 °C, initiating the polymerization with an organolithium compound. These organolithium compounds include, for example, alkyl lithium such as n-butyllithium or sec-butyllithium.

The branching agent used in the coupling reaction is divinylbenzene. The coupling reaction time can vary from 10 to 90 minutes, preferably between 30 and 60 minutes and the temperature ranges between 70 and 90 °C. The coupling agent/initiator ratio is preferably in the range 0.5 - 10, because lower ratios give coupling in levels never higher than 70 %. On the contrary, too high ratios cause broadening of the molecular weight polymer distribution.

The active polymer chains are terminated in step e) by adding a terminating agent. Preferred terminating agents are alcohols, phenols and water. After verification of the coupling and termination reaction, it is possible to add thereto a quantity between 0.1 and 1.5 % (based on polymer weight) of stabilizers. The polymer may be separated from the solvent by conventional methods known in the state of the art, such as precipitation in alcohol or elimination of the solvent by vapor entrapment, subsequent moving to its final drying extruder or appropriate technique for products to be dried.

The block copolymer obtained in step c) has preferably a molecular weight (Mpeak) from about 50,000 to about 120,000, most preferably from 70,000 to 100,000. A too low molecular weight polymer would not provide sufficient properties without adding more of the polymer and thus adding to the expense. If the molecular weight is too high, then it would be necessary to mix the composition at temperatures above 200°C, which is not desirable.

The average molecular weight (Mw) of the final coupled polymer is preferably comprised between 350,000 and 750,000, more preferably between 400,000 and 700,000.

In order to be effective in the present application, the block copolymer must have a monoalkenyl aromatic hydrocarbon content ranging from 20 to 45% by weight, preferably from 25 to 40% by weight. If the monoalkenyl aromatic hydrocarbon content is lower than about 20%, the physical properties are decreased and the molecular weight of the polymer would have to be much higher to get the proper physical properties and increasing the molecular weight causes mixing problems as stated above. If the monoalkenyl aromatic hydrocarbon content is above 45%, the bituminous component and the block copolymer component are generally too hard to mix. The elastomeric properties tend to decrease because of the presence of a continuous vinyl aromatic hydrocarbon phase in the polymer.

In the case of a multiblock copolymer of formula A₁B₁A₂B₂, the monoalkenyl aromatic hydrocarbon percentage in :he second block, A₂, is from 10 to 40% of the total amount of monoalkenyl aromatic hydrocarbon of the copolymer; very good properties are obtained when the amount varies from 15 to 30%.

As previously indicated, this type of product comprising highly branched block copolymer results in bitumen formulations with excellent properties in their application in waterproofing membranes.

The blend may contain other optional components usually employed in such materials such as fillers, antioxidants, plastifiers or fungicides. The type of filler used depends on the application. Typical fillers used in the art include mica, clay, treated clay, precipitated calcium carbonate, talc, diatomaceous earth, mineral slag and silicas.

### EXAMPLES

The bitumen used in the following Examples was Redaspol 30™ (Repsol Derivados, S.A.). Its main characteristics are:
· Penetration 25°C (1/10 mm): 125-200
· Ring and Ball softening temperature: 40
· Penetration index: -0.48

· Chemical composition S/ASTM D4124 (%)
   · Asphaltenes: 10
   · Polar-aromatic / resins: 39
   · Naphtenic-aromatic: 43
   · Saturated: 8
· Chemical composition S/IATROSCAN (%)
   · Asphaltenes: 6
   · Aromatic: 62
   · Polar: 25
   · Saturated 7

The bituminous block copolymer compositions of the present invention may be prepared by various methods. A convenient method comprises blending of the two components at an elevated temperature, preferably not more than about 200°C for the reasons discussed above.

### Experimental method

All the polymerization tests which are described in the present invention were carried out in a polymerization reactor with a capacity of 20 liters / 200 liters, provided with conditioning systems for nitrogen, venting and thermostating. Although it is possible to work in a continuous or semicontinuous mode, in this case a batch operation was used, i.e., a discontinuous mode. For it, the raw materials were purified using the methods described in the state of the art (for example distillation, drying, etc.). In a first step, a styrene cyclohexane solution was loaded into said reactor, then using the thermostating system to control the temperature of the test. Once this is reached, the initiator is added, in this case n-butyllithium, and the reaction is allowed to continue adiabatically, with a slight increase of temperature. The conversion of the monomer can be monitored using gas chromatography until total absence of styrene in the reaction medium. At this moment 1,3-butadiene is loaded and the temperature evolution control as well as gas chromatography will tell us when all the monomer has polymerized. Confirmed the absence of butadiene, the living polymer chains are coupled by addition of divinyl benzene. After 30 minutes coupling time, we finish the active polymer chains. Finally, the antioxidant is added, followed by the discharge and separation of the product from the solvent using the methods mentioned.

Then, a series of structural parameters and physical properties are measured. The vinyl and styrene content of the styrene-butadiene block copolymers (SBS) are determined by ¹H-RMN and ¹³C-NMR spectroscopy.

The molecular weight of the SBS, as well as the proportion of star polymer are determined using gel permeation chromatography (GPC) based on a calibration curve of polystyrene standards.

The blend viscosity is measured at 180°C by using a Haake viscometer (concentric cylinders) with variable stress frequency. The blend viscosity is calculated from the stress-stress frequency slope.

The incorporation of the polymer (milled to a uniform particle diameter) to the bitumen (Redaspol 30), was made in two different ways:
· high shear mixer Silverson LR4. Mixing time = 90 minutes. Mixing temperature = 190 - 200°C
· laboratory mixer IKA-SD4I Super Dispax. Mixing time = 30 minutes. Mixing temperature = 190-200°C

An appropriate amount of asphalt was heated in a quart can in an oven at 160°C for 45 minutes. The quart can was then placed in a heating mantel and, with heat and stirring, its temperature was raised to the mixing temperature. The polymer was then added slowly. Mixing was completed after the homogeneity of the mixture (judged visually) did not change for 15 minutes.

The softening point measurements used herein were determined by ASTM D36. The penetration value of the asphalts utilized herein was determined by ASTM D5. The cold bend properties were measured according to UNE 104-281/6-4: samples 0.3175 cm x 1.27 cm x 6.35 cm (0.125 inches x 0.5 inches x 2.5 inches) were prepared by pouring the molten blend, pressing to get the desired dimensions and cutting the sample specimens. The next day the samples were placed in an environmental chamber and allowed to equilibrate at a starting temperature (e.g. -10°C) for three hours. After equilibration, the samples were bent around a 2.54 cm (1 inch) cylindrical mandrel at a rate of 180°C per 5 seconds. At this and subsequent temperatures, ten samples were tested. The samples would either break or bend. Next, the chamber temperature was lowered 5°C and allowed to equilibrate for one-half hour. The samples were then tested at that temperature. The process was continued until they failed at a particular temperature. The lowest temperature at which the samples passed (bent without cracking) was reported as the cold bend temperature.

### Example 1

This example corresponds to the synthesis of 1,3-butadiene-styrene triblock copolymer prepared according to the prior art for comparative purposes by using a silicon tetrahalide (Polymer 1) and according to the object of the invention (Polymers 2-6) with the following structural properties (Table I).

**Table I**

| **Structural properties of the DVB coupled copolymers of the type A**_{**1**}**B**_{**1**} | | | | | | |
|---|---|---|---|---|---|---|
| **Structural property** | **Polymer 1 (comparative)** | **Polymer 2** | **Polymer 3** | **Polymer 4** | **Polymer 5** | **Polymer 6** |
| Spatial structure | Radial SBS (Si tetrahalide) (3-4 arms) | Radial SBS (DVB) (7-8 arms) | Radial SBS (DVB) (7-8 arms) | Radial SBS (DVB) (7-8 arms) | Radial SBS (DVB) (7-8 arms) | Radial SBS (DVB) (7-8 arms) |
| Styrene (%) | 30 | 32 | 30 | 31 | 31 | 30 |
| Block styrene (%) | 100 | 99 | 99 | 100 | 100 | 100 |
| Vinyl content (%) | 10 | 11 | 11 | 12 | 10 | 10 |
| Mwx10⁻³ | 250 | 494 | 509 | 592 | 612 | 627 |
| Coupling (%) | 89 | 89 | 89 | 94 | 94 | 92 |

The results of the evaluation of these polymers are found in Table I.I

**Table I.I**

| **Results of evaluation of the DVB-coupled copolymers of the type A**_{**1**}**B**_{**1**}**, in asphalt blends** | | | | | | |
|---|---|---|---|---|---|---|
| **Final property** | **Polymer 1** | **Polymer 2** | **Polymer 3** | **Polymer 4** | **Polymer 5** | **Polymer 6** |
| Blend viscosity (mPa.s) | 2228 | 1718 | 1625 | 1764 | 2036 | 2600 |
| Penetration 25°C (dmm) | 47 | 48 | 50 | 50 | 49 | 54 |
| Penetration 50°C (dmm) | 109 | 95 | 96 | 95 | 93 | 96 |
| Temperature R & B (°C) | 130 | 130,1 | 132,2 | 134,7 | 139,0 | 139,3 |
| Cold bend T (°C) | -34 | -33 | -36 | -33 | -33 | -33 |

In light of the results in Table I.I, it is observed that a significant improvement occurs in the properties of the bituminous formulation when using the samples (Polymer 2-6) coupled with divinyl benzene. The highly branched structure (7-8 arms) makes the blends more easily processable with blend viscosity values (1625-2036 mPa.s) lower than the ones (2228 mPa.s) for the 3-4 arm standard polymer in spite of higher polymer viscosity 32x10⁻⁶ m²/s -43x10⁻⁶ m²/s [32-43 centistokes (cst)]. The increase in the strength of the polymeric net structure will translate into an improvement in thermal susceptibility of the bituminous composition with better values for penetration at high temperatures and superior ring and ball softening temperatures.

### Example 2

The following samples, prepared according to the basic polymerization method above described, are multiblock copolymers . In this case, after the butadiene step polymerization and, consequently, before the DVB coupling reaction, a new styrene polymerization step is included. After verification of the total conversion of styrene monomer using gas chromatography (GC), 1% of the total amount of butadiene is added and allowed to react for 10 minutes in order to ensure the presence of butadiene units on the end of the chains to be coupled with DVB. The polymers were chosen to have varying styrene contents and varying molecular weights. Their structural parameters and evaluation results are shown in Table II and Table II.I.

**Table II**

| **Structural properties of DVB-coupled multiblock A**_{**1**}**B**_{**1**}**A**_{**2**}**B**_{**2**}**, polymers** | | | | |
|---|---|---|---|---|
| **Structural property** | **Polymer 1 (comparative)** | **Polymer 7** | **Polymer 8** | **Polymer 9** |
| Spatial structure | Radial SBS (Si tetrahalide) (3-4 arms) | Radial SBSB (DVB) (7-8 arms) | Radial SBSB (DVB) (7-8 arms) | Radial SBSB (DVB) (7-8-arms) |
| Styrene (%) | 30 | 36 | 34 | 34 |
| Block styrene (%) | 100 | 98 | 98 | 97 |
| Styrene 1^{st} - 2^{nd} block (%) | 100-0 | 80-20 | 80-20 | 80-20 |
| 1,2-Polybutadiene (%) | 10 | 9 | 10 | 10 |
| Mwx10⁻³ | 250 | 503 | 444 | 479 |
| Coupling (%) | 89 | 89 | 82 | 80 |

**Table II.I**

| **Results of evaluation of DVB-coupled multiblock A**_{**1**}**B**_{**1**}**A**_{**2**}**B**_{**2**} **in asphalt blends** | | | | |
|---|---|---|---|---|
| **Final property** | **Polymer 1** | **Polymer 7** | **Polymer 8** | **Polymer 8** |
| Blend viscosity (mPa.s) | 2228 | 2600 | 1718 | 1718 |
| Penetration 25°C (dmm) | 47 | 52 | 51 | 49 |
| Penetration 50°C (dmm) | 109 | 102 | 102 | 101 |
| Temperature R & B (°C) | 130 | 143,9 | 127,3 | 129,5 |
| Cold bend temperature (°C) | -34 | -33 | -35 | -33 |

It is observed that in all cases there is a significant improvement in processability.

### Example 3

The polymers included in the following series are chosen to analyze the effect of critical structural parameters like styrene content and 1,2-polybutadiene content on the final properties of the waterproofing membrane. Tables III and III.I show the structural analysis of the polymers and the results of the evaluation in waterproofing formulations.

**Table III**

| **Structural properties of DVB-coupled A**_{**1**}**B**_{**1**}**, polymers** | | | | | | | |
|---|---|---|---|---|---|---|---|
| **Structural property** | **Polymer 1 (comparative)** | **Polymer 4** | **Polymer 10** | **Polymer 11** | **Polymer 12** | **Polymer 13** | **Polymer 14** |
| Spatial structure | Radial SBS (Si tetrahalide) (3-4 arms) | Radial SBS (DVB) (7-8 arms) | Radial SBS (DVB) (7-8 arms) | Radial SBS (DVB) (7-8 arms) | Radial SBS (DVB) (7-8 arms) | Radial SBS (DVB) (7-8 arms) | Radial SBS (DVB) (7-8 arms) |
| Styrene (%) | 30 | 31 | 34 | 31 | 36 | 31 | 31 |
| Vinyl content (%) | 10 | 12 | 14 | 13 | 13 | 42 | 43 |
| Mwx 10⁻³ | 250 | 592 | 606 | 550 | 577 | 590 | 635 |
| Coupling (%) | 89 | 94 | 92 | 93 | 94 | 91 | 89 |

**Table III.I**

| **Results of evaluation of DVB-coupled A**_{**1**}**B**_{**1**} **polymers in asphalt blends** | | | | | | | |
|---|---|---|---|---|---|---|---|
| **Final property** | **Pol. I** | **Pol. 4** | **Pol. 10** | **Pol. 11** | **Pol. 12** | **Pol. 13** | **Pol. 14** |
| Blend viscosity (mPa·s) | 2228 | 1764 | 2043 | 1439 | 1300 | 1578 | 1346 |
| Penetration 25°C (dmm) | 47 | 50 | 52 | 50 | 53 | 52 | 50 |
| Penetration 50°C (dmm) | 109 | 95 | 96 | 100 | 97 | 106 | 103 |
| Temperature R & B (°C) | 130 | 134,7 | 145,0 | 125,8 | 138,8 | 136,0 | 139.7 |
| Cold bend temperature (°C) | -34 | -33 | -28 | -33 | -28 | -28 | -28 |

### Example 4

The new polymers designed, prepared according to the above described art, not only improve the properties in the usual polymer concentration for waterproofing membranes but also in lower percentages as it is shown in Table IV.I.

**Table IV.I**

| **Results of evaluation of DVB-coupled A**_{**1**}**B**_{**1**} **polymers in asphalt blends** | | | | | | |
|---|---|---|---|---|---|---|
| **Structural property** | **Polymer 1 (10%)** | **Polymer 1 (12%)** | **Polymer 1 (14%)** | **Polymer 5 (10%)** | **Polymer 5 (12%)** | **Polymer 5 (14%)** |
| Blend viscosity (mPa.s) | 1207 | 2228 | 4271 | 1950 | 2043 | 2971 |
| Penetration 50°C (dmm) | 127 | 109 | 106 | 101 | 96 | 89 |
| Ring and Ball softening temperature (°C) | 123 | 129 | 133 | 132,6 | 140,2 | 144,5 |
| Cold bend temperature (°C) | -28 | -33 | -35 | -33 | -33 | -35 |

## Claims

1. A monoalkenyl aromatic hydrocarbon and 1,3-conjugated diene block copolymer composition of general formula (I) + (II): 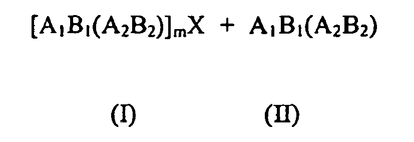 wherein
A₁, A₂ represent a monoalkenyl aromatic hydrocarbon polymeric block;
B₁, B₂ represent a conjugated 1,3-diene polymeric block;
X represents a divinyl benzene core;
m is from 2 to 10;
the amount of block copolymer according to formula (II) is from 0 to 20 % by weight;
the molar ratio A₁/A₂ varies from 90/10 to 60/40;
the molar ratio B₁/B₂ varies from 99.5/0.5 to 75/25; and
the monoalkenyl aromatic hydrocarbon content of the polymer varies from 20 to 45% by weight, and the 1,3-conjugated diene content of the polymer varies from 80 to 55% by weight.

2. A composition according to claim 1 wherein the vinyl content of the block copolymer composition is between 7 and 45 wt % .

3. Process for the preparation of a monoalkenyl aromatic hydrocarbon and 1,3-conjugated diene block copolymer composition according to claim 1, which comprises the following steps:
a) anionic polymerization of the monoalkenyl aromatic hydrocarbon in a hydrocarbon solvent, using alkyl lithium as initiator, at a temperature between 0°C and 150°C, to form block A₁; followed by
b) anionic polymerization of the 1,3-conjugated diene, in the same reaction medium wherein step a) has been carried out, using alkyl lithium as initiator, at a temperature between 0°C and 150°C, to form block B₁, thus obtaining copolymer A₁B₁; followed by
c) further polymerization of the monoalkenyl aromatic hydrocarbon, in the same reaction medium wherein steps a) and b) have been carried out, using alkyl lithium as initiator, at a temperature between 0°C and 150°C, to form block A₂, followed by further polymerization of the 1,3-conjugated diene, in the same reaction medium wherein the previous steps have been carried out, using alkyl lithium as initiator, at a temperature between 0°C and 150°C, to form block B₂, thus obtaining copolymer A₁B₁(A₂B₂); followed by
d) coupling reaction of the chains of the block copolymer A₁B₁(A₂B₂) from step c), with divinyl benzene, at a temperature between 70°C and 90°C, with a molar ratio divinyl benzene/organollitic compound between 0.5 and 10, preferably between 2 and 7, in order to couple among 2 and 10 chains of said copolymers; followed by
e) termination of the active chains with a polymerization terminating agent.

4. Process according to claim 3, wherein in steps a) , b), and in step c), the polymerization temperature is comprised between 20°C and 120°C.

5. Process according to claim 3, wherein the polymer obtained in step c) has a Mpeak molecular weight between 50,000 and 120,000.

6. Process according to claim 3, wherein said solvent is cyclohexane or a mixture of cyclohexane with alkane isomers with 5 to 10 carbon atoms.

7. Process according to claim 3, wherein said alkyl lithium compound is sec-butyl lithium or n-butyl lithium.

8. Process according to claim 3, further comprising the addition of a polar modifier together with the solvent.

9. Process according to claim 8, wherein said polar modifier is tetrahydrofurane or N,N,N',N'-tetramethylethylenediamine.

10. A bitumen composition comprising 7-15 % by weight of a monoalkenyl aromatic hydrocarbon and 1,3-conjugated diene block copolymer composition of formula: 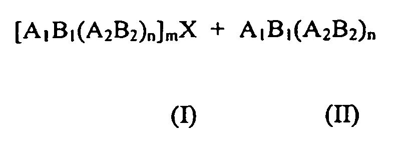 wherein
A₁, A₂ represent a monoalkenyl aromatic hydrocarbon polymeric block;
B_{1,} B₂ represent a conjugated 1,3-diene polymeric block;
X represents a divinyl benzene core;
n is 0 or 1;
m is from 2 to 10;
the amount of block copolymer according to formula (II) is from 0 to 20 % by weight;
the molar ratio A₁/A₂ varies from 90/10 to 60/40;
the molar ratio B₁/B₂ varies from 99.5/0.5 to 75/25; and
the monoalkenyl aromatic hydrocarbon content of the polymer varies from 20 to 45% by weight, and the 1,3-conjugated diene content of the polymer varies from 80 to 55 % by weight.

11. A bitumen composition according to claim 10 wherein the vinyl content of the block copolymer composition is between 7 and 45 wt %.

12. A bitumen composition according to claim 10 or 11 which comprises:
a) 85%-93% by weight of a bituminous component having a penetration from 70 to 220 decimillimeters at 25°C, and
b) 7%-15% by weight of a monoalkenyl aromatic hydrocarbon and 1,3-conjugated diene block copolymer composition according to claim 1 or 2 ,
wherein the penetration of the composition at 50°C in decimillimeters (P₅₀) fulfils the relationship: P₅₀ < 130 - 0.01 µ, wherein µ is the viscosity in mPa.s (cps), and wherein the cold bend temperature of said composition is lower than -25°C.

13. A waterproofing membrane, said waterproofing membrane having a composition which comprises a bitumen composition according to any of claims 10-12.

## Patentansprüche

1. Ein monoalkenyles aromatisches Kohlenwasserstoff und eine 1,3-konjugierte Dienblockkopolymerverbindung der allgemeinen Formel (I) + (II): 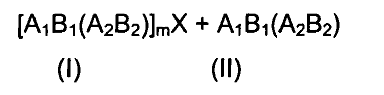 wobei
A₁A₂ einen monoalkenylen aromatischen Kohlenwasserstoffpolymerblock darstellen;
B₁B₂ einen konjugierten 1,3-Dien polymerischen Block darstellen;
X einen Divinylbenzenkern darstellt;
m von 2 bis 10 ist;
die Menge des Blockkopolymer gemäss der Formel (II) von 0 bis 20% des Gewichts beträgt:
das Molverhältnis A₁/A₂ zwischen 90/10 und 60/40 schwankt;
das Molverhältnis B₁/ B₂ zwischen 99,5 /0,5 und 75/25 schwankt; und
der Gehalt an monoalkenylem aromatischem Kohlenwasserstoff des Polymers zwischen 20 und 45% des Gewichts schwankt und der Gehalt an 1,3-konjugiertem Dien des Polymers zwischen 80 und 55% des Gewichts schwankt.

2. Eine Verbindung gemäss Anspruch 1, wobei der Vinylgehalt der Blockkopolymerverbindung zwschen 7 und 45% des Gewichts liegt.

3. Verfahren zum Herstellen eines monoalkenylen aromatischen Kohlenwasserstoff und einer 1,3-konjugierten Dienblockkopolymerverbindung gemäss Anspruch 1, das folgende Schritte umfasst:
a) Anionische Polymerisation des monoalkenylen aromatischen Kohlenwasserstoff in einer Wasserstofflösung unter Verwendung von Alkyllithium als Initiator, bei einer Temperatur zwischen 0°C und 150°C, um den Block A₁ zu bilden; gefolgt von
b) Anionischer Polymerisation des 1,3-konjugierten Dien im gleichen Reaktionsmedium, wobei Schritt a) durchgeführt wurde, mit Alkyllithium als Initiator bei einer Temperatur zwischen 0°C und 150°C, um den Block B₁ zu bilden, womit man das Kopolymer A₁B₁ erhält; gefolgt von
c) weiterer Polymerisation des monoakenylen aromatischen Kohlenwasserstoffs im gleichen Reaktionsmedium, wobei Schritt a) und ) durchgeführt wurden mit Alkyllithium als Initiator bei einer Temperatur zwischen 0°C und 150°C, um den Block A₂ zu bilden, gefolgt von einer weiteren Polymerisation des 1,3-konjugierten Dien im gleichen Reaktionsmedium, wobei die vorherigen Schritte durchgeführt wurden mit Alkyllithium als Initiator bei einer Temperatur zwischen 0°C und 150°C, um den Block B₂ zu bilden, wodurch man das Kopolymer A₁B₁(A₂B₂) erhält; gefolgt von
d) Kupplungsreaktion des Blockkopolymers A₁B₁(A₂B₂) aus dem Schritt c) mit Divinylbenzen bei einer Temperatur zwischen 70°C und 90°C mit einem Molverhältnis Divinylbenzen/organolythische Zusammensetzung zwischen 0,5 und 10, vorzugsweise zwischen 2 und 7, um zwischen 2 und 10 Ketten des besagten Kopolymers zu verbinden; gefolgt von
e) Beendigung der aktiven Ketten mit einem Polymerisationsvervollständiger.

4. Verfahren gemäss Anspruch 3, wobei in den Schritten a), b) und im Schritt c) die Polymerisationstemperatur zwischen 20°C und 120°C liegt.

5. Verfahren gemäss Anspruch 3, wobei das im Schritt c) erhaltene Polymer einen Spitzenmolekulargewicht zwischen 50.000 und 120.000 aufweist.

6. Verfahren gemäss Anspruch 3, wobei die besagte Lösung Zyklohexan ist oder eines Mischung aus Zyklohexan mit Alkanisomeren mit 5 bis 10 Kohlenstoffatomen.

7. Verfahren gemäss Anspruch 3, wobei die besagte Alkyllithiumverbindung sec-Butyllithium oder n-Butyllithium ist.

8. Verfahren gemäss Anspruch 3, wobei es ausserdem den Zusatz eines Polarmodifizierers zusammen mit der Lösung umfasst.

9. Verfahren gemäss Anspruch 8, wobei der besagte Polarmodifizierer Tetrahydrofuran oder N, N, N',N'-Tetramethylethylendiamin ist.

10. Eine Bitumenzusammensetzung, die 7 - 15% des Gewichts an monoalkenylem aromatischem Kohlenwasserstoff und 1,3-konjugierter Dienblockkopolymerverbindung der folgenden Formel umfasst: 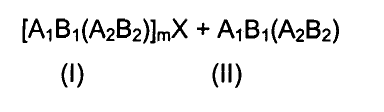 wobei
A₁A₂ einen monoalkenylen aromatischen Kohlenwasserstoffpolymerblock darstellen;
B₁B₂ einen konjugierten 1,3-Dien polymerischen Block darstellen;
X einen Divinylbenzenkern darstellt;
m 0 oder 1 ist;
die Menge des Blockkopolymer gemäss der Formel (II) von 0 bis 20% des Gewichts beträgt:
das Molverhältnis A_{1/}A₂ zwischen 90/10 und 60/40 schwankt;
das Molverhältnis B₁/ B₂ zwischen 99,5 /0,5 und 75/25 schwankt; und
der Gehalt an monoalkenylem aromatischem Kohlenwasserstoff des Polymers zwischen 20 und 45% des Gewichts schwankt und der Gehalt an 1,3-konjugiertem Dien des Polymers zwischen 80 und 55% des Gewichts schwankt.

11. Eine Bitumenverbindung gemäss Anspruch 10, wobei der Vinylgehalt der Blockkopolymerverbindung ziwschen 7 und 45% des Gewichts beträgt.

12. Eine Bitumenverbindung gemäss Anspruch 10 oder 11, die Folgendes umfasst:
a) 85% - 93% des Gewichts einer Bituminverbindung mit einer Durchdringung von 70 bis 220 Dezimillimeter bei 25°C und
b) 7% - 15% eines monoalkenylen aromatischen Kohlenwasserstoffes und 1,3-konjugierter Dienblockkopolymerverbindung gemäss Anspruch 1 oder 2,
Wobei die Durchdringung der Verbindung bei 50°C in Dezimillimetern (P₅₀) die Bedingung P₅₀ < 130 - 0,01 µ erfüllt, wobei µ die Viskosität in mPa.s (cps.) ist und die Kaltbiegetemperatur der besagten Verbindung unter -25°C liegt.

13. Eine Feuchtigkeitsschutzmembran, wobei besagte Feuchtigkeitsschutzmembran eine Zusammensetzung aufweist, die eine Bitumenverbindung gemäss einem der Ansprüche 10 - 12 umfasst.

## Revendications

1. Une composition d'hydrocarbure aromatique monoalkényle et de copolymère à blocs de 1,3-diène conjugué de formule générale (I) + (II) : 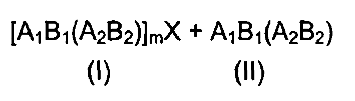 dans laquelle
A₁, A₂ représentent un bloc polymérique d'hydrocarbure aromatique monoalkényle ;
B₁, B₂ représente un bloc polymérique de 1,3diène conjugué ;
X représente un noyau de divinylbenzène
mestde2à10;
la quantité de copolymère à blocs selon la formule (II) est de 0 à 20% en poids ;
le rapport molaire A₁/A₂ varie de 90/10 à 60/40 ;
le rapport molaire B₁/B₂ varie de 99,5/0,5 à 75/25 ; et
le contenu en hydrocarbure aromatique monoalkényle du polymère varie de 20 à 45% en poids, et le contenu en 1,3-diène conjugué du polymère varie de 80 à 55% en poids.

2. Une composition selon la revendication 1 dans laquelle le contenu en vinyle de la composition de copolymère à blocs est entre 7 et 45% en poids.

3. Procédé de préparation d'une composition d'hydrocarbure aromatique monoalkényle et de copolymère à blocs de 1,3-dième conjugué selon la revendication 1, lequel comprend les étapes suivantes :
a) la polymérisation anionique de l'hydrocarbure aromatique monoalkényle dans un solvant hydrocarbure, en utilisant de l'alkyllithium comme initiateur, à une température entre 0°C et 150°C, pour former le bloc A₁ ; suivi de
b) la polymérisation anionique du 1,3-diène conjugué, dans le même milieu réactionnel dans lequel a été réalisée l'étape a), en utilisant de l'alkyllithium comme initiateur, à une température entre 0°C et 150°C, pour former le bloc B₁, en obtenant ainsi le copolymère A₁B₁, suivi de
c) une autre polymérisation de l'hydrocarbure aromatique monoalkényle, dans le même milieu réactionnel dans lequel les étapes a) et b) ont été réalisées, en utilisant de l'alkyllithium comme initiateur, à une température entre 0°C et 150°C, pour former le bloc A₂, suivi de la polymérisation postérieure du 1,3-diène conjugué, dans le même milieu réactionnel dans lequel les étapes précédentes ont été réalisées,, en utilisant de l'alkyllithium comme initiateur, à une température entre 0°C et 150°C, pour former le bloc B₂, en obtenant ainsi le copolymère A₁B₁(A₂B₂) ; suivi de
d) d'une réaction d'accouplement des chaînes du copolymère à blocs A₁B₁(A₂B₂) de l'étape c), avec du divinylbenzène, à une température entre 70°C et 90°C, avec un rapport molaire divinylbenzéne/composé oragnolitique entre 0,5 et 10, de préférence entre 2 et 7, pour accoupler entre 2 et 10 chaînes desdits copolymères ; suivi de
e) terminaison des chaînes actives avec un agent de terminaison de polymérisation

4. Procédé selon la revendication 3, dans lequel aux étapes a), b) et c), la température de polymérisation est comprise entre 20°C et 120°C.

5. Procédé selon la revendication 3, dans lequel le polymère obtenu à l'étape c) a un poids moléculaire Mpeak entre 50.000 et 120.000.

6. Procédé selon la revendication 3, dans lequel ledit solvant est du cyclohexane ou un mélange de cyclohexane avec des isomères d'alcane avec 5 à 10 atomes de carbone.

7. Procédé selon la revendication 3, dans lequel le composé alkyllithium est sec-butyllithium ou du n-butyllythium.

8. Procédé selon la revendication 3, comprenant en outre l'addition d'un modificateur polaire avec le solvant.

9. Procédé selon la revendication 8, dans lequel le modificateur polaire est du tétrahydrofurane ou du N,N,N',N'-tétraméthyléthylènediamine.

10. Une composition bitumineuse comprenant 7-15% en poids d'une composition d'hydrocarbure aromatique monoalkényle et de copolymère à blocs de 1,3-diène conjugué de formule 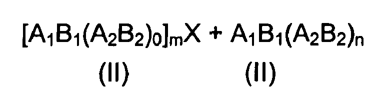 dans laquelle
A₁, A₂ représentent un bloc polymérique d'hydrocarbure aromatique monoalkényle ;
B₁, B₂ représente un bloc polymérique de 1,3-diène conjugué ;
X représente un noyau de divinylbenzène
n est 0 ou 1 ;
m est de 2 à 10 ;
la quantité de copolymère à blocs selon la formule (II) est de 0 à 20% en poids ;
le rapport molaire A₁/A₂ varie de 90/10 à 60/40 ;
le rapport molaire B₁/B₂ varie de 99,5/0,5 à 75/25 ; et
le contenu en hydrocarbure aromatique monoalkényle du polymère varie de 20 à 45% en poids, et le contenu en 1,3-diène conjugué du polymère varie de 80 à 55% en poids.

11. Une composition bitumineuse selon la revendication 10 dans laquelle le contenu de vinyle de la composition de copolymère à blocs est entre 7 et 45% en poids

12. Une composition bitumineuse selon la revendication 10 ou 11 qui comprend
a) 85%-93% en poids d'un composant bitumineux ayant une pénétration de 70 à 220 décimillimètres à 25°C, et
b) 7%-15% en poids d'une composition d'hydrocarbure aromatique monoalkényle et de copolymère à bloc de 1,3-diène conjugué selon la revendication 1 ou 2,
dans laquelle la pénétration de la composition à 50°C en décimillimètres (P₅₀) satisfait le rapport : P₅₀ < 130 - 0,01 µ, où µ est la viscosité en mPa.s (cps), et ou la température de pliage à froid de ladite composition es inférieure à -25°C

13. Une membrane imperméable, ladite membrane imperméable ayant une composition qui comprend une composition bitumineuse selon l'une quelconque des revendications 10-12.
